# EUROPEAN PATENT SPECIFICATION

(11) **EP 2 933 138 B1**
(45) Date of publication and mention of the grant of the patent: **12.06.2019**
(21) Application number: 15164134.7
(22) Date of filing: 17.04.2015
(51) Int. Cl.: B60P 1/64, B60P 7/13

(54) **EQUIPMENT FOR THE COLLECTION AND DISCHARGE OF MATERIAL**
Geräte zur Erfassung und Ableitung von MATERIAL
ÉQUIPEMENT POUR LA COLLECTE ET LA DÉCHARGE DE MATÉRIEL

(30) Priority: 18.04.2014 IT MO20140107
(43) Date of publication of application: 21.10.2015
(73) Proprietor: FORGHIERI S.r.l., 41053 Maranello (MO) (IT)
(72) Inventor: De Col, Marco, 41053 Maranello (MO) (IT)
(74) Representative: Zoli, Filippo

(56) References cited:
- EP-A1- 2 432 713
- DD-A1- 117 646
- DE-A1- 3 142 755
- GB-A- 2 183 713
- US-A- 3 252 608

## Description

The present invention relates to a piece of equipment for the collection and discharge of material, such as waste or the like.

The most used waste collection systems today provides for the use of containers of various sizes, generally divided according to the type of waste which they are designed to contain.

These containers are then emptied using special vehicles appropriately equipped to lift the containers themselves, to rotate them so as to allow the exit of the waste contained inside and to reposition them again to the ground. These vehicles are therefore able to empty the containers for the collection of the same type of waste and placed within a specific urban area and to transport them up to the respective collection center.

The patent EP 2432713 describes a piece of equipment for the differentiated waste collection which comprises a mobile vehicle on wheels having a bearing frame able to support a multi-tank structure having first actuator means able to allow the independent support with respect to the ground and second actuator means able to allow the rotation of each tank to empty the same.

The equipment described by EP 2432713 has a number of drawbacks.

The equipment thus manufactured, in fact, features complex load and discharge operations of the multi-tank structure, because the corresponding vehicle must necessarily be positioned with its frame below the structure itself, which requires complex positioning maneuvers, in particular when the multi-tank structure is positioned on the road edge.

In particular, the equipment described by EP 2432713 requires a large maneuvering space since, before the multi-tank structure to be loaded or discharged a free space must be present at least equal to the length of the vehicle itself so as to enable the latter to be arranged below the multi-tank structure itself starting from its rear side.

Another equipment for the collection and discharge of material is disclosed by DD 117 646 and DE 31 42 755 A1.

The main aim of the present invention is to provide a piece of equipment for the collection and discharge of material which allows to facilitate, with respect to known types of equipment, the load and discharge of the related containment tank.

Within this aim, one object of the present invention is to allow the load and discharge of the material containment tank regardless of its positioning. In particular in case the tank is able to contain waste and is positioned along the roadway, one object is to significantly reduce the maneuvering space required for its pick up/discharge with respect to the equipment described by EP 2432713.

Another object of the present invention is to provide a piece of equipment for the collection and discharge of material which allows to overcome the mentioned drawbacks of the prior art within the ambit of a simple, rational, easy, effective to use and affordable solution.

The objects stated above are achieved by the present equipment for the collection and discharge of material according to claim 1.

Other characteristics and advantages of the present invention will become better evident from the description of a preferred but not exclusive embodiment of a piece of equipment for the collection and discharge of material, illustrated by way of an indicative, but non-limiting example in the accompanying drawings wherein:

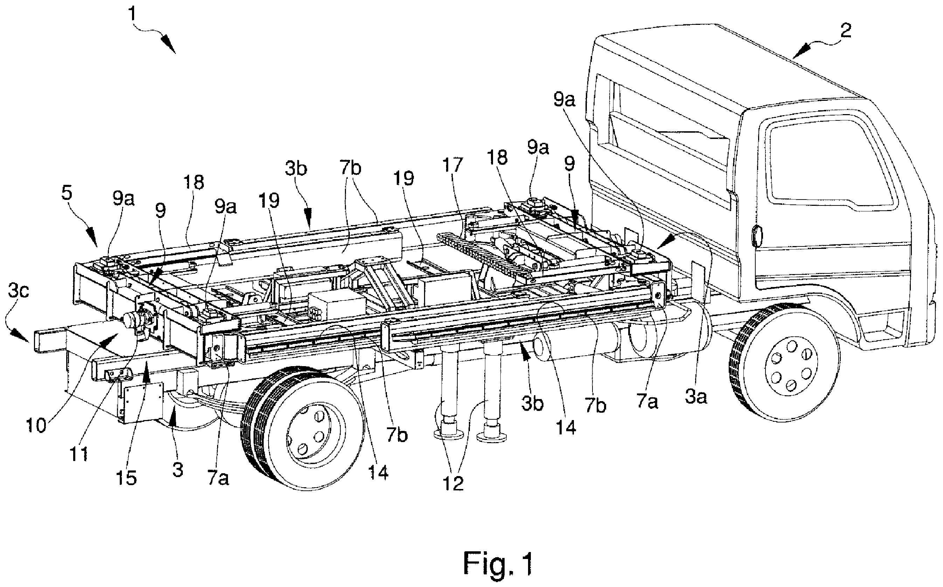

Figure 1 is an axonometric view of a piece of equipment according to the invention, without the container for the collection of material, in a first configuration of use;

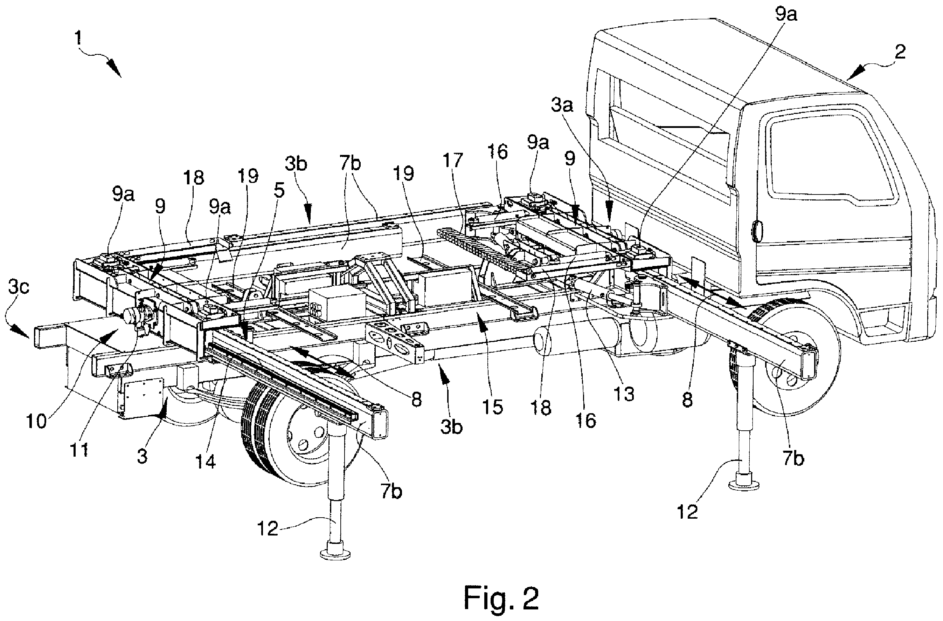

Figure 2 is an axonometric view of the equipment of Figure 1, in a second configuration of use;

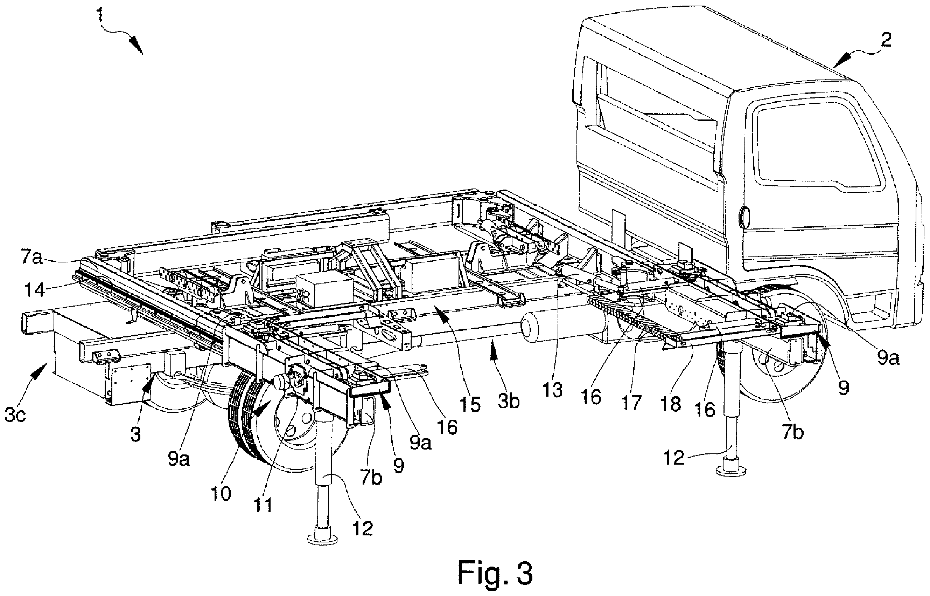

Figure 3 is an axonometric view of the equipment of Figure 1, in a third configuration of use;

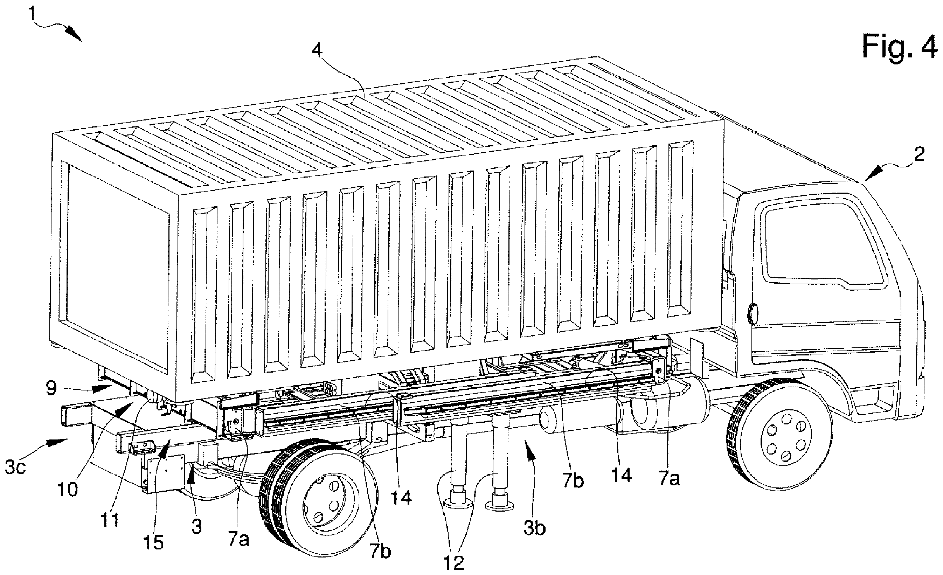

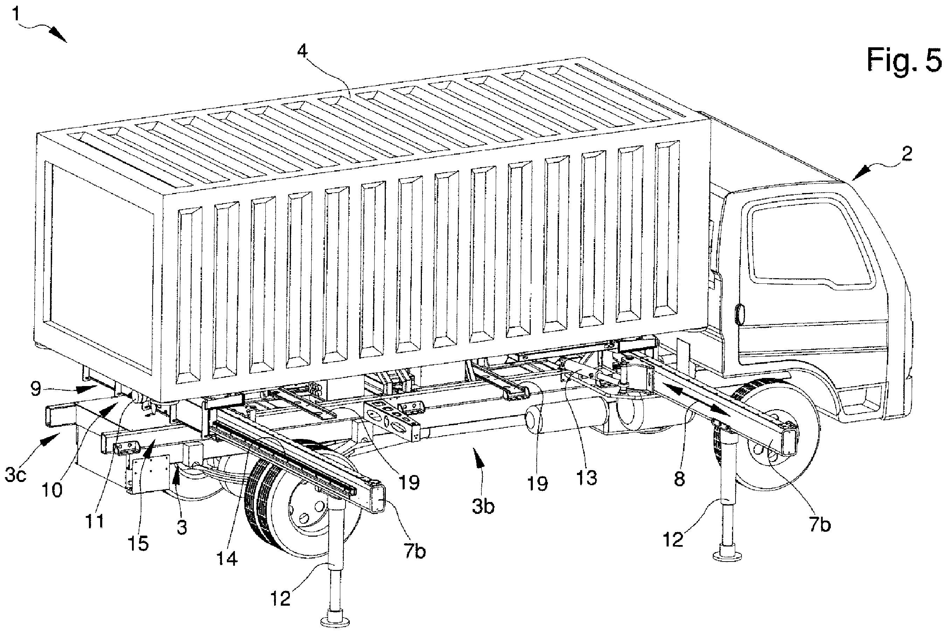

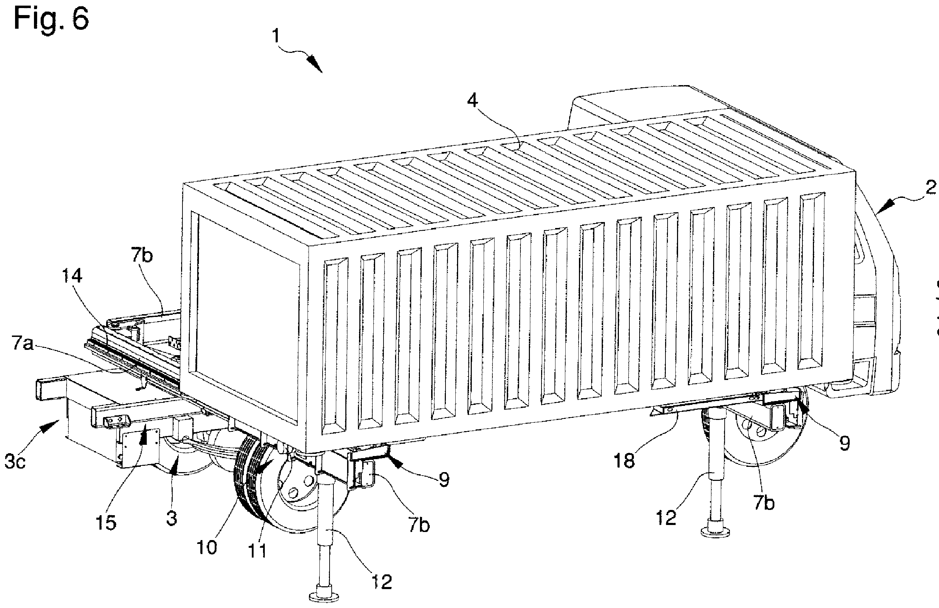

Figures 4 to 6 correspond to the configurations of use shown in Figures 1 to 3, with the equipment complete with the container for the collection of material;

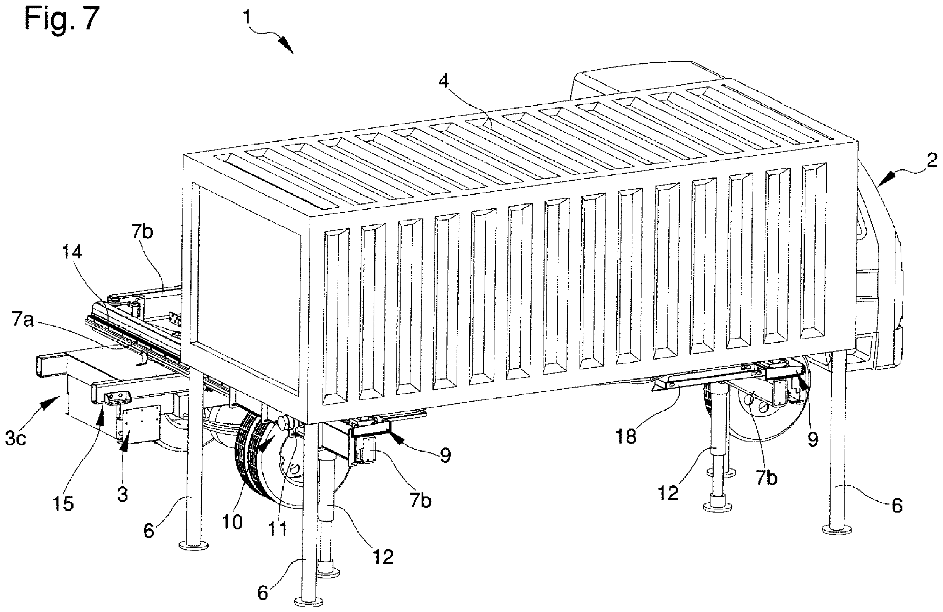

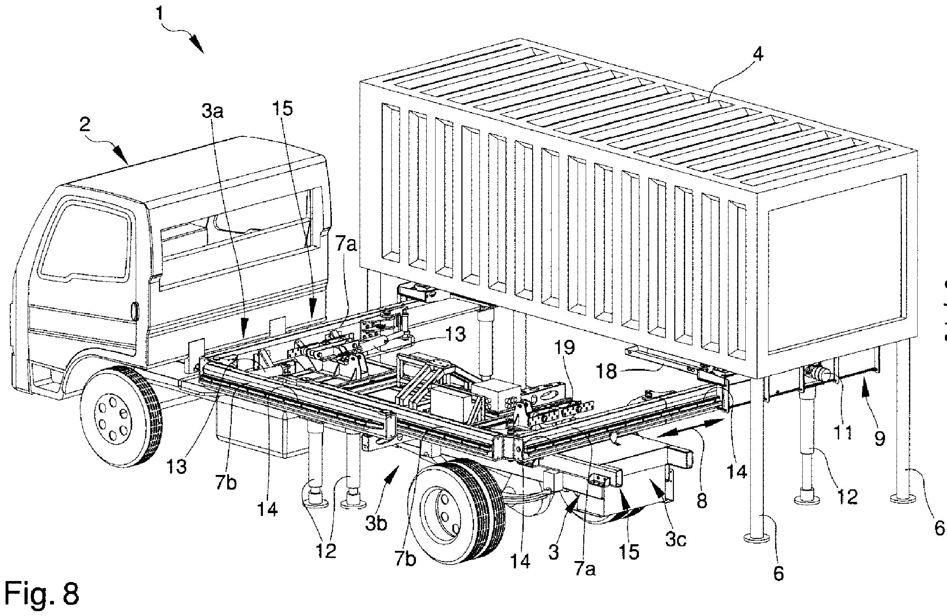

Figures 7 and 8 are two axonometric views of the equipment of Figure 1, complete with the container for the collection of the material, in a fourth configuration of use;

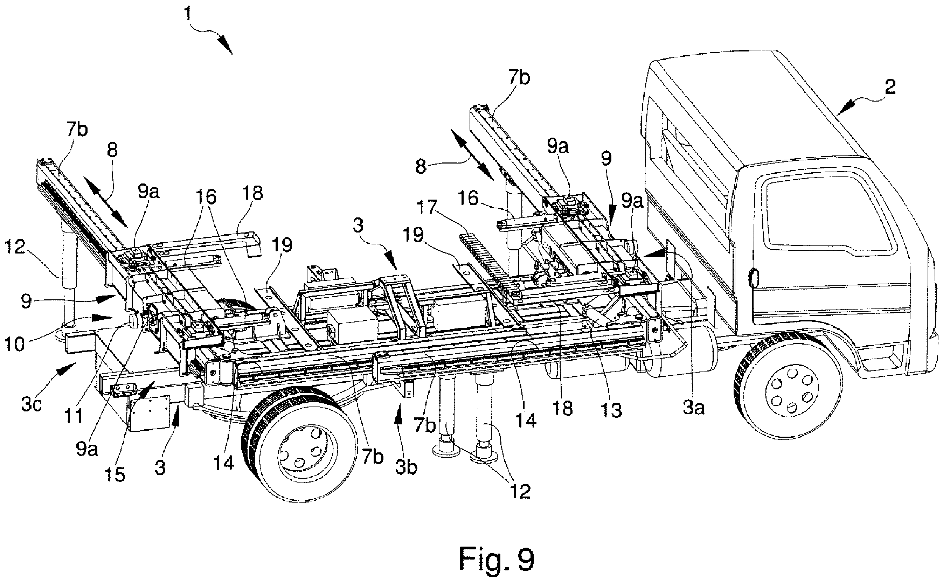

Figure 9 is an axonometric view of the equipment of Figure 1, in a fifth configuration of use;

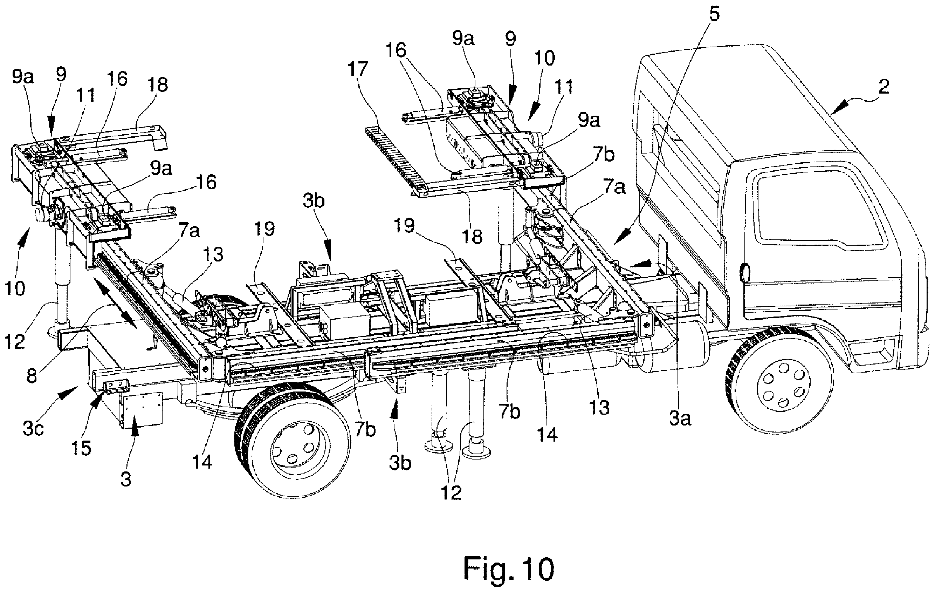

Figure 10 is an axonometric view of the equipment of Figure 1, in a sixth configuration of use.

With particular reference to such illustrations, reference number I globally designates a piece of equipment for the collection and discharge of material, in particular waste and the like.

The equipment 1 comprises a vehicle 2 movable on wheels and having a bearing frame 3.

The frame 3 has a front portion 3a, two lateral portions 3b next to the front portion 3a, and a rear portion 3c opposed to the front portion 3a. By the term "portion" used herein is meant the ideal side defined by the frame 3.

The terms "front", "lateral" and "rear" used herein refer to the antero-posterior direction of the vehicle, i.e. to the normal advancement direction of the vehicle. The equipment 1 then comprises at least a container 4 for the collection of material, such as waste or the like, supported, in use, by the frame 3.

The container 4 can therefore be the type of a container, a generic receptacle (other than a container) or a multi-tank structure.

The container 4, schematically shown in the illustrations, comprises at least a tank for collecting the material, preferably a plurality of tanks each able to contain a respective type of material. In the latter case, the tanks for the containment of different materials are supported by the same bearing structure (not shown in the illustrations).

The equipment 1 comprises sliding means 5 of the container 4 with respect to the frame 3 on the side of at least one of the lateral portions 3b. The sliding means 5 are therefore able to displace the container 4 from a transport position, in which it is positioned during the advancement of the vehicle 2, to a load/discharge position.

While in the transport position the container 4 is arranged at the frame 3, in the load/discharge position the container 4 is placed outside of the lateral space defined by the frame itself.

The container 4 comprises actuator means 6, e.g. the type of four fluid-operated cylinders arranged at the vertices of the container itself, operable to support independently the latter in the load/discharge position.

More particularly, the actuator means 6 are movable between a raised configuration, in which they allow the displacement of the container 4 with respect to the frame 3, and a lowered configuration, in which they rest on the ground to support the weight of the container itself.

Advantageously, the sliding means 5 comprise at least two guide elements 7a, 7b associated with the frame 3 at the front portion 3a and the rear portion 3b (3c?) respectively, and which extend along a sliding direction, identified in the illustrations by the double arrow 8, and at least two gripping elements 9 able to engage with the container 4 and associated in a sliding manner with a respective guide element 7a, 7b.

More particularly, the sliding means 5 comprise an auxiliary frame 15 associated with the frame 3 and supporting the guide elements 7a, 7b.

The sliding direction 8 therefore extends transversally to the lateral portions 3b, namely to the advancement direction of vehicle 2.

In the embodiment of the equipment 1 shown in the illustrations, each gripping element 9 has at least an engagement element 9a, preferably two as shown in the embodiments shown in the illustrations, extending upwards and able to be inserted within a respective seat (not visible in the figures) formed in the container 4, e.g. on its bottom wall.

Each engagement element 9a is movable between a first position, in which it is insertable/removable from the respective seat, and a second position, in which it is displaced with respect to the first position and is locked with respect to the seat itself.

More in detail, in the embodiment shown in the illustrations, each engagement element 9a is movable in rotation between the first and second position and actuator means 16 are able to operate in rotation the engagement element itself. The actuator means 16 are, e.g., the type of a fluid-operated actuator.

The sliding means 5 also comprise activation means 10 of the displacement of the gripping element 9 along the respective guide element 7a, 7b.

The activation means 10 comprise motor means 11, of the bidirectional type, associated with the gripping element 9 and able to operate in rotation at least one gear wheel (not visible in the figures) which engages with a corresponding rack 14 extending along the guide element 7a, 7b.

The activation means 10 of each gripping element 9 are operatively connected to an electrical power source (not visible in the figures) by means of electrical connection means 17 of the flexible type and associated on one side with the respective gripping element 9 and on the opposite side with the frame 3. Advantageously, each gripping element 9 comprises a first support element 18 of the respective electrical connection means 17, positioned transversally to the corresponding guide element 7a, 7b, and the frame 3 comprises a second support element 19 of the electrical connection means themselves, the first support element 18 therefore moving close to/away from the respective second support element 19 as a result of the displacement of the gripping element 9 along the sliding direction 8.

Conveniently, the sliding means 5 also comprise stabilizing means 12 of the frame 3 with respect to the ground.

More in detail, the stabilizing means 12 comprise at least two fluid-operated actuators arranged at the opposite longitudinal extremities of the guide element 7a, 7b, and movable between a raised configuration, in which the weight of the frame 3 rests on the wheels of the vehicle 2, and a lowered configuration, in which the actuators rest on the ground.

According to the invention, each guide element 7a, 7b comprises a first section 7a which extends along the sliding direction 8, integrally associated with the frame 3, and therefore fixed, and at least a pair of second sections 7b associated with the first section 7a on opposite sides of the same and movable in rotation relative thereto between a rest position, in which they are arranged transversally to the first section itself, and a work position, in which they are aligned to the first section 7a along the sliding direction 8. The second sections 7b of each guide element 7a, 7b are able to allow the displacement of the respective gripping element 9 along both ways of the sliding direction 8, so as to transfer the container 4 on the side of both lateral portions 3b. In this way the equipment 1 allows to load and discharge the container 4 irrespective of the direction taken by the vehicle 2.

More particularly, the second sections 7b of each of said pairs are pivotally associated with the respective first section 7a at its opposite longitudinal extremities.

The second sections 7b associated with each first section 7a are movable in a mutually independent manner between the respective rest position and the respective work position.

More in detail, in the rest position, each second section 7b is arranged substantially along a respective lateral portion 3b.

The second sections 7b arranged at the same lateral portion 3b move to overlap to each other in their respective rest positions.

The container 4 is at the first section 7a in its transport position, while it is at the second section 7b in its load/discharge position.

Conveniently, actuator means 13 are provided, such as a fluid-operated cylinder, able to control the displacement of each second section 7b from the rest position to the work position and vice versa. The cylinder 13 has the body associated with the first section 7a and the rod acting on the respective second section 7b.

Each of these gripping elements 9 has respective motor means 11 able to activate the transfer thereof along the respective sliding direction 8.

In this preferred embodiment, the stabilizing means 12 comprise four actuators, each of which is arranged at a longitudinal extremity of a respective guide element 7a, 7b.

The operation of the present invention is as follows.

As mentioned above, the container 4 rests, in its transport position, on the frame 3. In this work condition, the second sections 7b are in rest position, the stabilizing means 12 are in raised configuration and the vehicle 2 is therefore able to transport the container 4 from its road location up to the respective collection center and vice versa.

When the container 4 needs to be repositioned, emptied from its content, on its roadway, the second sections 7b of each guide element 7a, 7b are brought to the corresponding work position.

After the second sections 7b have reached their work position, the actuators 12 are brought to their lowered configuration, so as to stabilize the frame 3.

Subsequently, the motor means 11 are operated so as to move the respective gripping element 9, which is engaged with the container 4 by means of the engagement elements 9a, with respect to the corresponding guide element 7a, 7b along the sliding direction 8.

After the container 4 has reached the respective load/discharge position, which corresponds to the end-of-stroke position along the guide elements 7a, 7b, the actuator means 6 are operated the container itself is equipped of, so as to lift the latter by releasing it from the gripping elements 9, the engagement elements 9a of which have to be previously brought to their corresponding first work position to allow the disengagement thereof from the container 4. The end-of-stroke position of the guide elements 7a, 7b substantially corresponds to the end stretch of the second sections 7b.

At this point the gripping elements 9 can be moved again along the sliding direction 8 to bring them to the respective first sections 7a, so as to allow the return of the second sections 7b to the rest position, after lifting the actuators 12.

The loading operations on the frame 3 of the container 4 which is positioned along the roadway are substantially reverse to those described above and relating to the discharge of the container itself.

To pick up the container 4 the actuator means 6 must be previously operated by bringing them to the raised configuration, so as to lift the container itself relative to the ground.

More in detail, to pick up the container 4, the vehicle 2 moves laterally to it, i.e. with one of its lateral portions 3b arranged facing to the container itself, after which the second sections 7b of each guide element 7a, 7b are brought from the respective rest position to the work position, passing below the bottom wall of the container 4. After reaching the work position, the actuators 12 are lowered so as to stabilize the frame 3.

Subsequently, the motor means 11 are operated so as to move the gripping elements 9 along the respective guide elements 7a, 7b, bringing them below the container 4.

More in detail, the positioning of the gripping elements 9 must be precise since the respective engagement elements 9a have to be substantially aligned to the corresponding seats formed on the bottom wall of the container 4.

After the gripping elements 9 have reached the desired position, the container 4 is lowered, by lifting the actuator means 6, so as to engage it with the gripping elements themselves and so that its weight is supported by the guide elements 7a, 7b.

Then the motor means 11 are operated so as to displace the gripping elements 9, and therefore the container 4, along the sliding direction 8 to bring them at the first sections 7a, the engagement elements 9a having previously been brought to the corresponding second work positions so as to make them integral with the container 4.

After the container 4 has reached the transport position, the stabilizing means 12 are removed and the second sections 7b are brought back to the rest position.

It is easy to understand how, depending on the position where the container 4 has to be loaded/discharged with respect to the frame 3, the second sections 7b are operated and arranged at the corresponding lateral portion 3b, without changing therefore the direction of the vehicle 2 in the carriageway direction, the gripping elements 9 being able to move along both ways of the sliding direction 8.

It has in practice been ascertained how the described invention achieves the intended objects and in particular the fact is underlined that the equipment making the subject of the present invention allows to carry out the pick-up and discharge of containers for the collection of material in an extremely practical and easy manner and irrespective of the direction of the vehicle along the carriageway direction.

In particular, the presence of the lateral sliding means of the container with respect to the frame allows to pick up and discharge the containers from the road edge by simply placing the vehicle alongside the container itself, and without it being necessary therefore to perform complex positioning maneuvers of the vehicle itself.

## Claims

1. Equipment (1) for the collection and discharge of material, comprising:
- a vehicle (2) movable on wheels and having a bearing frame (3) which has a front portion (3a), turned towards the side of advancement direction of the vehicle itself along its running direction, two lateral portions (3b), next to said front portion (3a), and a rear portion (3c) opposed to the front portion itself;
- at least a container (4) for the collection of material which can be positioned on said frame (3);
- sliding means (5) of said container (4) with respect to said frame (3) on the side of at least one of said lateral portions (3b), where said sliding means (5) are able to displace the container (4) itself to a load/discharge position arranged outside of the lateral space defined by said frame (3) and comprise at least two guide elements (7a, 7b) associated with said frame (3) at said front portion (3a) and said rear portion (3c), respectively and which extend at least along a sliding direction (8) and at least two gripping elements (9) able to engage with said container (4) and associated in a sliding manner with a respective guide element (7a, 7b);
- actuator means (6) which can be operated to support independently the container itself in said load/discharge position;
where each of said guide elements (7a, 7b) comprises a respective fixed first section (7a), which extends along said sliding direction (8), and a pair of second sections (7b) associated with said first section (7a) on opposite sides of the same and movable in rotation between a rest position, in which they are arranged transversally to the first section itself, and a work position, in which they are aligned to said first section (7a) along said sliding direction (8), the second sections (7b) of each of said guide elements (7a, 7b) being able to allow the displacement of said gripping elements (9) along both ways of said sliding direction (8),
where said sliding means (5) comprise activation means (10) of the displacement of said gripping element (9) along the respective guide element (7a, 7b) and
**characterized in that** said activation means (10) comprise motor means (11) associated with said gripping element (9) and able to operate in rotation a respective gear wheel which engages with a corresponding rack (14) extending along said guide element (7a, 7b).

2. Equipment (1) according to claim 1, **characterized in that** said second sections (7b) associated with each of said first sections (7a) are movable in a mutually independent manner between said rest position and said work position.

3. Equipment (1) according to claim 1 or 2, **characterized in that** said second sections (7b) are arranged along one of said lateral portions (3b) in said rest position.

4. Equipment (1) according to one or more of the preceding claims, **characterized in that** the second sections (7b) associated with said first sections (7a) and arranged at the same lateral portion (3b) partially overlap to each other in their respective rest configurations.

5. Equipment (1) according to one or more of the preceding claims, **characterized in that** said first sections (7a) have an elongated conformation and that the respective second sections (7b) are associated at the opposite longitudinal extremities.

6. Equipment (1) according to one or more of the preceding claims, **characterized in that** said sliding means (5) comprise stabilizing means (12) able to lift said frame (3) with respect to the ground.

7. Equipment (1) according to one or more of the preceding claims, **characterized in that** said stabilizing means (12) comprise at least two fluid-operated actuators arranged at the opposite extremities of said guide element (7a, 7b).

8. Equipment (1) according to one or more of the preceding claims, **characterized in that** at least one of said gripping elements (9) comprises at least an engagement element (9a) extending upwards and able to be inserted within a relative seat formed in said container (4).

9. Equipment (1) according to claim 8, **characterized in that** said engagement element (9a) is movable between a first position, in which it is insertable/removable from the respective seat, and a second position, in which it is locked with respect to the seat itself.

10. Equipment (1) according to claim 9, **characterized in that** said engagement element (9a) is movable in rotation between said first and said second position and **in that** it comprises actuator means (16) able to operate in rotation said engagement element (9a).

11. Equipment (1) according to one or more of the preceding claims, **characterized in that** it comprises electrical connection means (17) of said activation means (10) to an electrical power source associated with said frame (3), said electrical connection means (17) being of the flexible type and being associated on one side with the respective gripping element (9) and on the opposite side with said frame (3).

12. Equipment (1) according to claim 11, **characterized in that** each of said gripping elements (9) comprises a first support element (18) of said electrical connection means (17), arranged transversally to the corresponding second section (7b) and **in that** said frame (3) comprises a second support element (19) of the electrical connection means themselves, said first support element (18) moving close to/away from said second support element (19) as a result of the displacement of said gripping element (9) along said sliding direction (8).

## Patentansprüche

1. Einrichtung (1) für die Aufnahme und Entladung von Material, umfassend:
- ein Fahrzeug (2), das auf Rädern beweglich ist und einen tragenden Rahmen (3) aufweist, der einen vorderen Abschnitt (3a), gerichtet zur Seite der Vorschubrichtung des Fahrzeugs selbst entlang dessen Fahrrichtung, zwei seitliche Abschnitte (3b) neben dem vorderen Abschnitt (3a), und einen hinteren Abschnitt (3c) gegenüber dem vorderen Abschnitt selbst, aufweist;
- mindestens einen Container (4) zur Aufnahme von Material, der auf dem Rahmen (3) angeordnet werden kann;
- Verschiebeeinrichtungen (5) des Containers (4) in Bezug auf den Rahmen (3) an der Seite mindestens eines der seitlichen Abschnitte (3b), wobei die Verschiebeeinrichtungen (5) geeignet sind, den Container (4) selbst in eine Lade-/Entladeposition, die außerhalb des durch den Rahmen (3) definierten seitlichen Raums angeordnet ist, zu verschieben, und mindestens zwei Führungselemente (7a, 7b), welche mit dem Rahmen (3) an dem vorderen Abschnitt (3a) beziehungsweise an dem hinteren Abschnitt (3c) verbunden sind und sich zumindest entlang einer Verschieberichtung (8) erstrecken, und mindestens zwei Greifelemente (9), die geeignet sind, mit dem Container (4) in Eingriff zu stehen, und mit einem entsprechenden Führungselement (7a, 7b) verschiebbar verbunden sind, umfassen;
- Stellantriebe (6), die betrieben werden können, um den Container selbst unabhängig in der Lade-/Entladeposition zu stützen;
wobei jedes der Führungselemente (7a, 7b) je einen feststehenden ersten Abschnitt (7a), der sich entlang der Verschieberichtung (8) erstreckt, und ein Paar von zweiten Abschnitten (7b), die mit dem ersten Abschnitt (7a) an dessen gegenüberliegenden Seiten verbunden und drehbeweglich sind zwischen einer Ruheposition, in der sie quer zum ersten Abschnitt selbst angeordnet sind, und einer Arbeitsposition, in der sie entlang der Verschieberichtung (8) auf den ersten Abschnitt (7a) ausgerichtet sind, umfasst, wobei die zweiten Abschnitte (7b) jedes der Führungselemente (7a, 7b) geeignet sind, das Verschieben der Greifelemente (9) entlang beider Richtungen der Verschieberichtung (8) zu ermöglichen,
wobei die Verschiebeeinrichtungen (5) Betätigungsmittel (10) für die Verschiebung der Greifelemente (9) entlang des jeweiligen Führungselements (7a, 7b) umfassen, und
**dadurch gekennzeichnet, dass** die Betätigungsmittel (10) Motormittel (11) umfassen, die mit dem Greifelement (9) verbunden und geeignet sind, ein entsprechendes Zahnrad drehend zu betreiben, welches mit einer entsprechenden Zahnstange (14), die sich entlang des Führungselements (7a, 7b) erstreckt, in Eingriff steht.

2. Einrichtung (1) nach Anspruch 1, **dadurch gekennzeichnet, dass** die zweiten Abschnitte (7b), die jeweils mit einem der ersten Abschnitte (7a) verbunden sind, in einer voneinander unabhängigen Weise zwischen der Ruheposition und der Arbeitsposition beweglich sind.

3. Einrichtung (1) nach Anspruch 1 oder 2, **dadurch gekennzeichnet, dass** die zweiten Abschnitte (7b) in der Ruheposition entlang eines der seitlichen Abschnitte (3b) angeordnet sind.

4. Einrichtung (1) nach einem oder mehreren der vorstehenden Ansprüche, **dadurch gekennzeichnet, dass** sich die zweiten Abschnitte (7b), die mit den ersten Abschnitten (7a) verbunden und an demselben seitlichen Abschnitt (3b) angeordnet sind, in ihren jeweiligen Ruheanordnungen teilweise gegenseitig überlappen.

5. Einrichtung (1) nach einem oder mehreren der vorstehenden Ansprüche, **dadurch gekennzeichnet, dass** die ersten Abschnitte (7a) eine längserstreckte Ausbildung aufweisen, und dass die jeweiligen zweiten Abschnitte (7b) an den gegenüberliegenden Längsenden verbunden sind.

6. Einrichtung (1) nach einem oder mehreren der vorstehenden Ansprüche, **dadurch gekennzeichnet, dass** die Verschiebeeinrichtungen (5) Stabilisierungsmittel (12) umfassen, die geeignet sind, den Rahmen (3) in Bezug auf den Boden anzuheben.

7. Einrichtung (1) nach einem oder mehreren der vorstehenden Ansprüche, **dadurch gekennzeichnet, dass** die Stabilisierungsmittel (12) mindestens zwei fluidbetriebene Stellantriebe umfassen, die an den gegenüberliegenden Enden des Führungselements (7a, 7b) angeordnet sind.

8. Einrichtung (1) nach einem oder mehreren der vorstehenden Ansprüche, **dadurch gekennzeichnet, dass** mindestens eines der Greifelemente (9) mindestens ein Eingriffselement (9a) umfasst, das sich nach oben erstreckt und geeignet ist, in einen zugehörigen Sitz, der in dem Container (4) ausgebildet ist, eingefügt zu werden.

9. Einrichtung (1) nach Anspruch 8, **dadurch gekennzeichnet, dass** das Eingriffselement (9a) beweglich ist zwischen einer ersten Position, in der es in den jeweiligen Sitz eingefügt/aus demselben entfernt werden kann, und einer zweiten Position, in der es in Bezug auf den Sitz selbst gesperrt ist.

10. Einrichtung (1) nach Anspruch 9, **dadurch gekennzeichnet, dass** das Eingriffselement (9a) drehbeweglich ist zwischen der ersten und der zweiten Position, und dass es Stellantriebe (16) umfasst, die geeignet sind, das Eingriffselement (9a) drehend zu betreiben.

11. Einrichtung (1) nach einem oder mehreren der vorstehenden Ansprüche, **dadurch gekennzeichnet, dass** sie elektrische Verbindungsmittel (17) des Betätigungsmittels (10) an eine mit dem Rahmen (3) verbundene elektrische Stromquelle umfasst, wobei die elektrischen Verbindungsmittel (17) von der flexiblen Art sind und an einer Seite mit dem jeweiligen Greifelement (9) und an der gegenüberliegenden Seite mit dem Rahmen (3) verbunden sind.

12. Einrichtung (1) nach Anspruch 11, **dadurch gekennzeichnet, dass** jedes der Greifelemente (9) ein erstes Tragelement (18) der elektrischen Verbindungsmittel (17) umfasst, das quer zum jeweiligen zweiten Abschnitt (7b) angeordnet ist, und dass der Rahmen (3) ein zweites Tragelement (19) der elektrischen Verbindungsmittel selbst umfasst, wobei sich das erste Tragelement (18) als ein Ergebnis des Verschiebens des Greifelements (9) entlang der Verschieberichtung (8) zum zweiten Tragelement (19) hin/von diesem weg bewegt.

## Revendications

1. Équipement (1) pour la collecte et la décharge de matériaux, comprenant :
- un véhicule (2) déplaçable sur roues et ayant un châssis porteur (3) qui a une partie avant (3a), tournée vers le côté de la direction d'avancement du véhicule lui-même dans sa direction de marche, deux parties latérales (3b), à côté de ladite partie avant (3a), et une partie arrière (3c) opposée à la partie avant elle-même ;
- au moins un conteneur (4) pour la collecte de matériaux qui peut être positionné sur ledit châssis (3) ;
- des moyens de coulissement (5) dudit conteneur (4) par rapport audit châssis (3) sur le côté d'au moins une desdites parties latérales (3b), où lesdits moyens de coulissement (5) sont aptes à déplacer le conteneur (4) lui-même à une position de chargement/décharge agencée à l'extérieur de l'espace latéral défini par ledit châssis (3) et comprennent au moins deux éléments de guidage (7a, 7b) associés audit châssis (3) au niveau de ladite partie avant (3a) et de ladite partie arrière (3c), respectivement, et qui s'étendent au moins dans une direction de coulissement (8) et au moins deux éléments de préhension (9) aptes à venir en prise avec ledit conteneur (4) et associés de manière coulissante avec un élément de guidage (7a, 7b) respectif ;
- des moyens actionneurs (6) qui peuvent être commandés pour supporter indépendamment le conteneur lui-même dans ladite position de chargement/décharge ;
où chacun desdits éléments de guidage (7a, 7b) comprend une première section fixe respective (7a), qui s'étend dans ladite direction de coulissement (8), et une paire de secondes sections (7b) associées à ladite première section (7a) sur des côtés opposés de celle-ci et déplaçables en rotation entre une position de repos, dans laquelle elles sont agencées transversalement à la première section elle-même, et une position de travail, dans laquelle elles sont alignées sur ladite première section (7a) dans ladite direction de coulissement (8), les secondes sections (7b) de chacun desdits éléments de guidage (7a, 7b) étant aptes à permettre le déplacement desdits éléments de préhension (9) dans les deux sens de ladite direction de coulissement (8),
où lesdits moyens de coulissement (5) comprennent des moyens d'activation (10) du déplacement dudit élément de préhension (9) le long de l'élément de guidage respectif (7a, 7b) et
**caractérisé en ce que** lesdits moyens d'activation (10) comprennent des moyens moteurs (11) associés audit élément de préhension (9) et aptes à commander en rotation une roue dentée respective qui entre en prise avec une crémaillère correspondante (14) s'étendant le long dudit élément de guidage (7a, 7b).

2. Équipement (1) selon la revendication 1, **caractérisé en ce que** lesdites secondes sections (7b) associées à chacune desdites premières sections (7a) sont déplaçables de manière mutuellement indépendante entre ladite position de repos et ladite position de travail.

3. Équipement (1) selon la revendication 1 ou 2, **caractérisé en ce que** lesdites secondes sections (7b) sont agencées le long d'une desdites parties latérales (3b) dans ladite position de repos.

4. Équipement (1) selon une ou plusieurs des revendications précédentes, **caractérisé en ce que** les secondes sections (7b) associées auxdites premières sections (7a) et agencées au niveau de la même partie latérale (3b) se chevauchent partiellement dans leurs configurations de repos respectives.

5. Équipement (1) selon une ou plusieurs des revendications précédentes, **caractérisé en ce que** lesdites premières sections (7a) ont une conformation allongée et que les secondes sections respectives (7b) sont associées au niveau des extrémités longitudinales opposées.

6. Équipement (1) selon une ou plusieurs des revendications précédentes,
**caractérisé en ce que** lesdits moyens de coulissement (5) comprennent des moyens de stabilisation (12) aptes à soulever ledit châssis (3) par rapport au sol.

7. Équipement (1) selon une ou plusieurs des revendications précédentes, **caractérisé en ce que** lesdits moyens de stabilisation (12) comprennent au moins deux actionneurs commandés par fluide agencés aux extrémités opposées dudit élément de guidage (7a, 7b).

8. Équipement (1) selon une ou plusieurs des revendications précédentes, **caractérisé en ce qu'**au moins l'un desdits éléments de préhension (9) comprend au moins un élément de prise (9a) s'étendant vers le haut et apte à être inséré à l'intérieur d'un siège relatif formé dans ledit conteneur (4).

9. Équipement (1) selon la revendication 8, **caractérisé en ce que** ledit élément de prise (9a) est déplaçable entre une première position, dans laquelle il peut être inséré/enlevé du siège respectif, et une seconde position, dans laquelle il est verrouillé par rapport au siège lui-même.

10. Équipement (1) selon la revendication 9, **caractérisé en ce que** ledit élément de prise (9a) est déplaçable en rotation entre ladite première et ladite seconde position et **en ce qu'**il comprend des moyens actionneurs (16) aptes à commander en rotation ledit élément de prise (9a).

11. Équipement (1) selon une ou plusieurs des revendications précédentes,
**caractérisé en ce qu'**il comprend des moyens de connexion électrique (17) desdits moyens d'activation (10) à une source d'énergie électrique associée audit châssis (3), lesdits moyens de connexion électrique (17) étant du type flexible et étant associés sur un côté à l'élément de préhension respectif (9) et sur le côté opposé audit châssis (3).

12. Équipement (1) selon la revendication 11, **caractérisé en ce que** chacun desdits éléments de préhension (9) comprend un premier élément de support (18) dudit moyen de connexion électrique (17), agencé transversalement à la seconde section correspondante (7b) et **en ce que** ledit châssis (3) comprend un second élément de support (19) des moyens de connexion électrique eux-mêmes, ledit premier élément de support (18) se rapprochant/s'éloignant dudit second élément de support (19) du fait du déplacement dudit élément de préhension (9) dans ladite direction de coulissement (8).
